# EUROPEAN PATENT SPECIFICATION

(11) **EP 3 874 960 B1**
(45) Date of publication and mention of the grant of the patent: **07.01.2026**
(21) Application number: 19878114.8
(22) Date of filing: 22.08.2019
(51) Int. Cl.: A23D 9/02, A21D 13/00, A23D 9/00, A23G 3/40, A23L 29/00, A21D 2/36

(54) **METHOD FOR PRODUCING ALMOND-FLAVORED OIL/FAT**
VERFAHREN ZUR HERSTELLUNG VON ÖL/FETT MIT MANDELGESCHMACK
PROCÉDÉ DE PRODUCTION D'HUILE/MATIÈRE GRASSE AROMATISÉE À L'AMANDE

(30) Priority: 29.10.2018 JP 2018202440
(43) Date of publication of application: 08.09.2021
(73) Proprietor: Fuji Oil Co., Ltd., Izumisano-shi, Osaka 598-8540 (JP)
(72) Inventor: SUZUKI, Yuta, Tsukubamirai-shi, Ibaraki 300-2436 (JP); KUMATANI, Tomoaki, Tsukubamirai-shi, Ibaraki 300-2436 (JP); UETSUKI, Takuma, Tsukubamirai-shi, Ibaraki 300-2436 (JP)
(74) Representative: Becker, Eberhard
(86) International application number: PCT/JP2019/032795
(87) International publication number: WO 2020/090194

(56) References cited:
- WO-A1-2017/061524
- JP-A- S5 840 063
- JP-A- S6 019 449
- JP-B1- 6 536 733
- US-A1- 2009 092 732
- DATABASE WPI Week 198941, Derwent World Patents Index; AN 1989-296574, XP002804782
- CEPEDA-VAZQUEZ MAYELA ET AL: "How ingredients influence furan and aroma generation in sponge cake", FOOD CHEMISTRY, ELSEVIER LTD, NL, vol. 245, 20 November 2017 (2017-11-20), pages 1025 - 1033, XP085314201, ISSN: 0308-8146, DOI: 10.1016/J.FOODCHEM.2017.11.069

## Description

### [Technical Field]

The present invention relates to a method for producing an oil and fat having a good roasted almond flavor, and a food product formed using the flavored oil and fat.

### [Background Art]

JP H01-218549 A discloses a method for producing a flavored oil and fat. It discloses a method of adding rice bran to an oil and fat and heating them.

US 2009/0092732 A1 discloses introducing a material to be extracted and an edible fat into an extractor equipped with a device for collecting stream and gases, such as a condenser. The contents are heated, and the resultant extract is cooled. The distillate collected with the condenser during heating is returned to the extractor. Alternatively, the distillate is further extracted with an edible oil and/or fat and the extract obtained by the distillate extraction with the oil and/or fat is returned to the extractor. Thus, an oil-based processed flavor is produced. This oil-based processed flavor is added to or incorporated in a food or beverage as it is or, if necessary, after having been diluted, emulsified, powdered, or otherwise treated.
WO 2017/061524 discloses a method for producing a flavoring oil including a step for heating a mixture of fats/oils and an allium vegetable of which the yield changes after being fried.
Cepeda-Vazquey Mayela et al., Food Chemistry, 2017, 245, 1025-1033 is a study of formulation as affecting the simultaneous generation of furan and furfural, along with other aroma quality markers, in sponge cake by means of headspace trap/GC-MS.
JP S58 40063 A discloses denaturing at least one edible natural raw material selected from the group consisting of an edible material of natural material such as meat of bird or animal, fish meat, etc., an edible material of natural vegetable such as vegetable, grain, spices, mushroom, etc., their hydrolzates, and substances obrained by treting them with an enzyme, and at least one of edible fats and oil, under heating at about 60-180°C for about 10 minutes - 18 hours in the presence of a blended spice composition such as plural kinds of synthetic spice compounds to give a treated substance, from which flavor component-containing fats and oils after denaturation by heating are separated and collected.
JP S60 19449 A discloses putting in a cooker a vegetable oil or an animal oil. Upon or after heating, a vegetable material such as vegetable, etc. to be treated or an animal material to be treated is added and immersed in it, heat- treated at the oil temperature, and treated under reduced pressure, so that an extract component, and other components of the material to be treated are eluted in the oil, and the oil is taken out from the cooker.

### [Summary of Invention]

### [Technical Problem]

In western-style confectioneries such as madeleines, financiers, and macaroons, relatively expensive raw materials such as butter and ground almonds are used as raw materials to realize a gorgeous and rich flavor that is typical of western-style confectionery. However, these raw materials are expensive due to reasons such as small supply with increasing demand accompanying population growth around the world. In addition, a method of achieving use of alternative raw materials and reduction in amount used within a range not changing a flavor has been sought also from the viewpoint of sustainability. Accordingly, an objective of the present invention is to provide a method for producing a flavored oil and fat which can reduce an amount of ground almonds used when making western-style confectionery.

### [Solution to Problem]

The inventors of the present invention have diligently conducted examinations to achieve the above-described objective.

JP H01-218549 A was intended for a rice oil-derived oil and fat that is rich in the flavor, but a new flavor has been further required. The inventors of the present invention have further conducted examinations and found a production method by which an oil and fat having a good roasted almond flavor can be obtained through heating and reacting the oil and fat in the presence of an almond-derived raw material. Thereby, the present invention has been completed.

That is, the present invention is defined in the appended claims.

### [Advantageous Effects of Invention]

According to the present invention, it is possible to provide an oil and fat having a good roasted almond flavor for use in western-style confectionery.

### [Description of Embodiments]

The present invention relates to a method for producing an oil and fat having a good roasted almond flavor. In particular, the purpose is to produce a flavored oil and fat still having deliciousness and longer flavor persistence even with reduction in amount of ground almonds used in western-style confectionery. Western-style confectionery is a product having wheat flour, butter, and ground almonds as typical raw materials. More specifically, there are crème d'amandes, macaroons, dacquoises, and the like, in addition to madeleines and financiers. A most preferable western-style confectionery is a product, such as madeleines and financiers, which is obtained by preparing a dough by blending ground almonds in a dough mainly composed of wheat flour, and baking the dough. By using an oil and fat according to the present invention in such a product, effects of maintaining deliciousness and imparting longer flavor persistence while allowing reduction in amount of ground almonds used in western-style confectionery are exhibited. In the present invention, the expression "for use in western-style confectionery" is used, and the expression also includes confectioneries to be created in the future by easily imparting an almond flavor using the present oil and fat, in addition to existing confectionery for which recipes in which ground almonds are blended in have already been established in the past.

In the method for producing an oil and fat according to the present invention, various kinds of oil and fat can be used. Specific examples thereof include various animal and vegetable oils/fats such as soybean oil, cottonseed oil, corn oil, safflower oil, olive oil, palm oil, rapeseed oil, rice bran oil, sesame oil, kapok oil, palm oil, palm kernel oil, coconut oil, lard, fish oil, and whale oil, and hardened oils, fractionated oils, and transesterified oils thereof. It is obvious that an oil and fat in which two or more of these oils have been mixed can also be used.

A palm oil, a fractionated palm oil, and a rapeseed oil are more preferable, and it is possible to impart a good roasted almond flavor to an oil and fat by using, even more preferably, a palm oil or a fractionated palm oil.

In the method for producing an oil and fat according to the present invention, an almond-derived raw material is used for the purpose of flavoring an oil and fat. In the present invention, almond-derived raw materials include ground almonds. Ground almonds are used**,** because they are finely crushed, and this improves contact efficiency with an oil and fat, making it easier to extract flavoring ingredients and making it easier to separate them by filtration. The ground almonds are powdered almonds and are sometimes called almond flour. They are roughly classified into blanched ground almonds (as used in the present invention), unblanched ground almonds, and roasted ground almonds. The present invention uses blanched ground almonds, and it is possible to impart a good roasted almond flavor to an oil and fat by the method according to the present invention.

In the method for producing an oil and fat according to the present invention, it is required to perform heating in the presence of a total amount of 0.6% to 20% by mass of an almond-derived raw material. The phrase "0.6% by mass or more with respect to the oil" means that, for example, 0.6 kg or more of an almond-derived raw material is added into 100 kg of an oil and fat. An amount of the almond-derived raw material added into the oil and fat is more preferably 1% to 15% by mass, and by using, even more preferably, 1.5% to 13% by mass of the almond-derived raw material, it is possible to obtain a good roasted almond-flavored oil and fat.

Next, a process of the production method according to the present invention will be described.

In the method for producing an oil and fat according to the present invention, a defined amount of the almond-derived raw material is added, and heating is performed at 80°C to 210°C. It is possible to obtain a good roasted almond-flavored oil and fat by heating preferably at 110°C to 200°C, and more preferably at 130°C to 185°C.

In the method for producing an oil and fat according to the present invention, a defined amount of the almond-derived raw material is added, and a reaction is caused at a defined temperature for 0.2 to 4 hours. It is possible to obtain a good roasted almond-flavored oil and fat by causing a reaction more preferably for 0.3 to 3 hours, and even more preferably for 0.5 to 2 hours.

In the method for producing an oil and fat according to the present invention, it is preferable that a defined amount of the almond-derived raw material be added, and a reaction be caused at a defined heating temperature for a defined time in a depressurization state in which a degree of vacuum in a reaction system is 60 mmHg or less. A depressurization condition is more preferably 55 mmHg or less and is even more preferably 50 mmHg or less. By reducing a pressure inside the reaction system, thermal degradation of an oil and fat can be suppressed.

Furthermore, in the method for producing an oil and fat according to the present invention, it is preferable to carry out the reaction in an inert gas atmosphere in which an oxygen concentration in the reaction system is 5.0% by volume or less. Furthermore, heating in an inert gas atmosphere to raise a temperature is also one aspect of the method for producing an oil and fat according to the present invention. An oxygen concentration in the reaction system is more preferably 1.0% by volume or less, and is even more preferably 0.5% by volume or less. Heating and stirring by this method is more preferable, because it allows volatile aroma components that contribute to the flavor to remain in an oil while suppressing thermal degradation of an oil and fat. As an inert gas for lowering an oxygen concentration in the reaction system, nitrogen, carbon dioxide, and the like can be exemplified.

In the present invention, a defined amount of the almond-derived raw material is added into a defined oil and fat. Thereafter, a reaction is caused at a defined heating temperature for a defined time while stirring. The reaction is carried out by starting time measurement from a time point at which an oil and fat temperature reaches a temperature set as a heating temperature, and maintaining the temperature within a range of a set temperature plus or minus 5°C for a set time. It is desirable that a temperature be raised to the set temperature as quickly as possible, and it is not desirable to perform stepwise temperature change that intentionally changes a heating temperature and a time.

In the present invention, after a predetermined reaction, a solid content containing the added almond-derived raw material is removed. This removal can be performed by filtration through filter paper, but a filter press or a centrifuge machine can also be used in large-scale production. In this manner, an oil and fat having a desired roasted almond flavor can be prepared. Accordingly, the same flavor-imparting effect is expected for, for example, nuts other than almonds, and grains such as wheat, soybeans, corn, and other legumes.

Although it is speculation, it is thought that, in an oil and fat obtained by the method according to the present invention, ingredients, which are contained in heated almond-derived raw materials such as furfural, ethanone, 2-furanmethanol, 5-methyl-butyrolactone, and 2,5-dimethyl-4-hydroxy-3(2H)-furanone, are active ingredients that impart the flavor.

A flavored oil and fat, which has an almond flavor, obtained by the present invention can be used as an oil and fat suitable for usage applications in various food products such as margarine, shortening, paste, cream, and western-style confectionery. In particular, when it is used for western-style confectionery, a preferred almond flavor can be obtained even with reduction in amount of ground almonds used.

### Examples

Hereinafter, examples of the present invention will be described to explain the present invention in more detail, but the spirit of the present invention is not limited to the following examples. In the examples, % and part mean a weight basis.

### Examination 1 Preparation of flavored oil and fat

**Table 1 Formulation**

| | Example | | | | | | | | | Comparative Example | |
|---|---|---|---|---|---|---|---|---|---|---|---|
| | 1 | 2* | 3* | 4* | 5 | 6 | 7 | 8 | 9 | 1 | 2 |
| Purified palm oil | 100 | 100 | 100 | 100 | 100 | 100 | 100 | 100 | 100 | 100 | 100 |
| Blanched ground almond | 8.0 | | | | 4.0 | 16.0 | 8.0 | 8.0 | 8.0 | 8.0 | 8.0 |
| Unblanched ground almond | | 8.0 | | | | | | | | | |
| Roasted ground almond | | | 8.0 | | | | | | | | |
| Sliced almond | | | | 8.0 | | | | | | | |
| Heating temperature (°C) | 150 | 150 | 150 | 150 | 150 | 150 | 130 | 170 | 150 | 50 | 230 |
| Heating time (h) | 1.0 | 1.0 | 1.0 | 1.0 | 1.0 | 1.0 | 1.0 | 1.0 | 1.0 | 6.0 | 0.5 |

| | | | | | | | | | | | |
|---|---|---|---|---|---|---|---|---|---|---|---|
| *Reference Example not according to the present invention. | | | | | | | | | | | |

In a 1 L three-necked flask, 40 g of blanched ground almonds ("Blanched almond flour" sold by Tomizawa Shoten Co., Ltd.) were added into 500 g of a purified palm oil (manufactured by FUJI OIL CO., LTD.), and the mixture was reacted at 150°C for 1 hour under a reduced pressure of 50 mmHg while being stirred (350 rpm). Thereafter, the mixture was cooled to 60°C, and an oil and fat and a solid content were separated by filtration with filter paper (No. 5C, Advantec Toyo Kaisha, Ltd.). Thereby, a roasted almond-flavored oil and fat of Example 1 was obtained.

A roasted almond-flavored oil and fat of Example 2 was obtained in the same manner as in Example 1 except that the blanched ground almonds were replaced by unblanched ground almonds ("Unblanched ground almonds" sold by Tomizawa Shoten Co., Ltd.).

A roasted almond-flavored oil and fat of Example 3 was obtained in the same manner as in Example 1 except that the blanched ground almonds were replaced by roasted ground almonds ("Roasted almond flour" sold by Tomizawa Shoten Co., Ltd.).

A roasted almond-flavored oil and fat of Example 4 was obtained in the same manner as in Example 1 except that the blanched ground almonds were replaced by sliced almonds ("Sliced raw almonds" sold by Tomizawa Shoten Co., Ltd.).

A roasted almond-flavored oil and fat of Example 5 was obtained in the same manner as in Example 1 except that an amount of the blanched ground almonds added was changed from 8.0% to 4.0%.

A roasted almond-flavored oil and fat of Example 6 was obtained in the same manner as in Example 1 except that an amount of the blanched ground almonds added was changed from 8.0% to 16.0%.

A roasted almond-flavored oil and fat of Example 7 was obtained in the same manner as in Example 1 except that a heating temperature was changed from 150°C to 130°C.

A roasted almond-flavored oil and fat of Example 8 was obtained in the same manner as in Example 1 except that a heating temperature was changed from 150°C to 170°C.

In the same manner as in Example 1 except that a reaction was carried out without reducing a pressure by filling a reaction system with nitrogen as an inert gas to reduce an oxygen concentration to 0.1% by volume or less, the following process was performed as follows. In a 1 L three-necked flask, 40 g of blanched ground almonds were added into 500 g of a purified palm oil, and the mixture was reacted at 150°C for 1 hour while being stirred (350 rpm). Thereafter, the mixture was cooled to 60°C, and an oil and fat and a solid content were separated by filtration with filter paper. Thereby, a roasted almond-flavored oil and fat of Example 9 was obtained.

A roasted almond-flavored oil and fat of Comparative Example 1 was obtained in the same manner as in Example 1 except that a heating temperature was changed from 150°C to 50°C, a reaction time was changed to 6 hours, and separation was performed by filtration after the reaction.

A roasted almond-flavored oil and fat of Comparative Example 2 was obtained in the same manner as in Example 1 except that a heating temperature was changed from 150°C to 230°C, and a reaction time was changed to 0.5 hours.

### "Method of evaluating flavored oil and fat"

Regarding the flavored oil and fats prepared with the formulations shown in Table 1, five panelists, who are engaged in the development of western-style confectionery materials and are conducting a sensory evaluation of a prototype western-style confectionery every day, performed a sensory evaluation on these samples by a consensus on scores of 1 to 5 while imagining a roasted almond flavor. As a result of the flavor evaluation, 3 or higher points were regarded as a pass.

The flavored oil and fats (Examples 1 to 9 and Comparative Examples 1 and 2) obtained in Examination 1 were evaluated according to the above-mentioned "Method of evaluating flavored oil and fat," and the results are shown in Table 2 below. In this case, a commercially available sweet almond oil (manufactured by ease Co., Ltd.) was evaluated based on the same criteria as Reference Example 1, but the evaluation was 1 point because a specific flavor of roasted almonds was not recognized in the almond oil itself.

**Table 2 Evaluation results of flavor of flavored oil and fat**

| | Reference Example | Example | | | | | | | | | Comparative Example | |
|---|---|---|---|---|---|---|---|---|---|---|---|---|
| Flavor evaluation | 1 | 1 | 2 | 3 | 4 | 5 | 6 | 7 | 8 | 9 | 1 | 2 |
| | 1.0 | 3.5 | 3.0 | 3.5 | 3.0 | 3.0 | 4.0 | 3.0 | 3.5 | 4.5 | 2.0 | 1.0 |

### Examination 2 Preparation of madeleine

**Table 3 Formulation of madeleine**

| | Reference Example | Comparative Example | | Example | | | | |
|---|---|---|---|---|---|---|---|---|
| | 2 | 3 | 4 | 10 | 11* | 12* | 13 | 14 |
| Weak flour | 125.0 | 187.5 | 187.5 | 187.5 | 187.5 | 187.5 | 187.5 | 187.5 |
| Blanched ground almond | 125.0 | 62.5 | | | | | | |
| Oil and fat containing almond essence | | | 62.5 | | | | | |
| Example 1 | | | | 62.5 | | | | |
| Example 2 | | | | | 62.5 | | | |
| Example 3 | | | | | | 62.5 | | |
| Example 8 | | | | | | | 62.5 | |
| Example 9 | | | | | | | | 62.5 |
| Granulated sugar | 250.0 | 250.0 | 250.0 | 250.0 | 250.0 | 250.0 | 250.0 | 250.0 |
| Egg white | 250.0 | 250.0 | 250.0 | 250.0 | 250.0 | 250.0 | 250.0 | 250.0 |
| Butter | 250.0 | 250.0 | 250.0 | 250.0 | 250.0 | 250.0 | 250.0 | 250.0 |
| Starch syrup | 25.0 | 25.0 | 25.0 | 25.0 | 25.0 | 25.0 | 25.0 | 25.0 |
| Baking powder | 2.5 | 2.5 | 2.5 | 2.5 | 2.5 | 2.5 | 2.5 | 2.5 |

| | | | | | | | | |
|---|---|---|---|---|---|---|---|---|
| *Reference example not according to the present invention. | | | | | | | | |

125 parts of weak flour, 125 parts of blanched ground almonds (skinless ground almonds), 250 parts of granulated sugar, 250 parts of butter, 25 parts of starch syrup, and 2.5 parts of baking powder were mixed in each rate, and while stirring the mixture using a mixer, 250 parts of egg white warmed to around 25°C was gradually added thereinto. Thereby, a madeleine dough was prepared. This kneaded dough was flowed into a madeleine mold over about 8 minutes, and the dough was baked in an oven under conditions of 230°C and 15 minutes. Thereby, a madeleine of Reference Example 2 was prepared.

A madeleine of Comparative Example 3 was prepared in the same manner as in the reference example except that an amount of ground almonds was changed to 62.5 parts (half the amount of Reference Example 2), and an amount of weak flour was increased to 187.5 parts.

A madeleine of Comparative Example 4 was prepared in the same manner as in Comparative Example 3 except that ground almonds were replaced by an oil and fat containing almond essence. The oil and fat containing almond essence was a purified palm oil into which 0.2% by weight of a baking-resistant almond flavor had been added. This oil and fat was melted at about 50°C and was gradually added after addition of an egg white liquid.

A madeleine of Example 10 was prepared in the same manner as in Comparative Example 3 except that ground almonds were replaced by the roasted almond-flavored oil and fat of Example 1.

A madeleine of Example 11 was prepared in the same manner as in Example 10 except that the roasted almond-flavored oil and fat of Example 1 was replaced with the roasted almond-flavored oil and fat of Example 2.

A madeleine of Example 12 was prepared in the same manner as in Example 10 except that the roasted almond-flavored oil and fat of Example 1 was replaced with the roasted almond-flavored oil and fat of Example 3.

A madeleine of Example 13 was prepared in the same manner as in Example 10 except that the roasted almond-flavored oil and fat of Example 1 was replaced with the roasted almond-flavored oil and fat of Example 8.

A madeleine of Example 14 was prepared in the same manner as in Example 10 except that the roasted almond-flavored oil and fat of Example 1 was replaced with the roasted almond-flavored oil and fat of Example 9.

### "Method of evaluating flavor of madeleine"

The same five people who were the panelists in the above-described "Method of evaluating flavored oil and fat" performed a sensory evaluation on the madeleine samples prepared with the formulations shown in Table 3 after one day and four days. They performed a flavor evaluation regarding the initial flavor and its persistence.

First, the flavor after one day of Reference Example 2 (in which ground almonds were used 100%) was evaluated as 3 points (standard). By comparing with this flavor, a decision was made by a consensus on scores of 1 to 5 in terms of whether imparting of a stronger almond-flavor was recognized and whether the flavor was preferred for madeleines. As a result of the flavor evaluation, 3 or higher points were regarded as a pass.

**Table 4 Evaluation results of flavor of madeleine**

| | | Reference Example | Comparative Example | | Example | | | | |
|---|---|---|---|---|---|---|---|---|---|
| | | 2 | 3 | 4 | 10 | 11 | 12 | 13 | 14 |
| Flavor evaluation | After one day | 3.0 | 2.0 | 2.0 | 3.0 | 3.0 | 3.0 | 3.0 | 4.0 |
| | After four days | 2.0 | 1.0 | 1.0 | 3.0 | 3.0 | 3.0 | 3.0 | 4.0 |
| Amount of ground almonds used (%) | | 100 | 50 | 0 | 0 | 0 | 0 | 0 | 0 |

Regarding an amount of ground almonds used in the table, an amount of ground almonds used in each of the comparative examples and examples was calculated with an amount of ground almonds used in the reference example as 100%.

### Examination 3 Preparation of galette dough

**Table 5 Formulation of galette**

| | Reference Example | Comparative Example | Example | |
|---|---|---|---|---|
| | 3 | 5 | 15 | 16 |
| Weak flour | 400.0 | 425.0 | 450.0 | 450.0 |
| Blanched ground almond | 100.0 | 50.0 | | |
| Butter | 400.0 | 425.0 | 400.0 | 400.0 |
| Example 1 | | | 50.0 | |
| Example 9 | | | | 50.0 |
| Powdered sugar | 306.0 | 306.0 | 306.0 | 306.0 |
| Egg yolk | 72.0 | 72.0 | 72.0 | 72.0 |
| Table salt | 6.0 | 6.0 | 6.0 | 6.0 |
| Baking powder | 3.6 | 3.6 | 3.6 | 3.6 |

306 parts of powdered sugar, 6 parts of table salt, and 400 parts of butter were rubbed together with a mixer to be sufficiently formed into a paste. Thereafter, 72 parts of egg yolk was gradually flowed thereinto while being stirred. Finally, a powder obtained by mixing 400 parts of weak flour, 100 parts of blanched ground almonds (skinless ground almonds), and 3.6 parts of baking powder in each rate in advance was gradually added into the mixture. Thereby, a galette dough was prepared. This dough was cut into a 5.5-cm piece. The cut piece was put in a 6.0-cm cercle and baked in an oven under conditions of 155°C for top heat and 135°C for bottom heat for 28 minutes. Thereby, a galette of Reference Example 3 was prepared.

A galette of Comparative Example 5 was prepared in the same manner as in Reference Example 3 except that an amount of ground almonds was changed to 50 parts (half the amount of Reference Example 3), an amount of weak flour was increased to 425 parts, and an amount of butter was increased to 425 parts.

A galette of Example 15 was prepared in the same manner as in Reference Example 3 except that ground almonds were replaced by the roasted almond-flavored oil and fat of Example 1, an amount of weak flour was changed to 450 parts, and an amount of butter was changed to 400 parts.

A galette of Example 16 was prepared in the same manner as in Example 15 except that the roasted almond-flavored oil and fat of Example 1 was replaced with the roasted almond-flavored oil and fat of Example 9.

### "Method of evaluating flavor of galette"

The same five people who were the panelists in the above-described "Method of evaluating flavored oil and fat" performed a sensory evaluation on the galette samples prepared with the formulations shown in Table 3 after one day and four days. They performed a flavor evaluation regarding the initial flavor and its persistence.

First, the flavor after one day of Reference Example 3 (in which ground almonds were used 100%) was evaluated as 3 points (standard). By comparing with this flavor, a decision was made by a consensus on scores of 1 to 5 in terms of whether imparting of a stronger almond-flavor was recognized and whether the flavor was preferred for galettes. As a result of the flavor evaluation, 3 or higher points were regarded as a pass.

**Table 6 Evaluation results of flavor of galette**

| | | Reference Example | Comparative Example | Example | |
|---|---|---|---|---|---|
| | | 3 | 5 | 15 | 16 |
| Flavor evaluation | After one day | 3.0 | 2.0 | 3.0 | 4.0 |
| | After four days | 2.0 | 1.0 | 3.0 | 4.0 |
| Amount of ground almonds used (%) | | 100 | 50 | 0 | 0 |

### Conclusions

By adding blanched ground almonds into an oil and fat and heating them, it is possible to produce a roasted almond-flavored oil and fat having deliciousness and longer flavor persistence while allowing reduction in amount of ground almonds used in western-style confectionery.

In addition, it was confirmed that a flavored oil and fat, which was prepared by using blanched ground almonds and replacing the inside of a reaction system with an inert gas, represented a preferred flavor which does not exist in the related art and is different from the ground almonds themselves, and its flavor stood out particularly when it is used for western-style confectionery.

## Claims

1. A production method of a flavored oil and fat, comprising:
reacting an oil and fat at 80°C to 210°C for 0.2 to 4 hours in the presence of 0.6% to 20% by mass of an almond-derived raw material with respect to the oil and removing solid contents thereafter, wherein the almond-derived raw material is blanched ground almonds.

2. The production method according to claim 1, wherein the reaction is carried out in a depressurization state.

3. The production method according to claim 1, wherein the reaction is carried out in an inert gas atmosphere.

4. The production method according to claim 3, wherein a temperature is raised by heating in the inert gas atmosphere.

5. A method of forming a food product, comprising:
forming a flavored oil and fat by the production method according to any one of claims 1 to 4, and
using the flavored oil and fat for forming the food product.

6. The method of forming the food product according to claim 5, wherein the food product is formed as a western-style confectionery.

## Patentansprüche

1. Verfahren zur Herstellung eines aromatisierten Öls und Fetts, umfassend:
ein Öl und Fett wird bei 80 °C bis 210 °C für 0,2 bis 4 Stunden in der Gegenwart von 0,6 bis 20 Massenprozent eines aus Mandeln gewonnenen Rohstoffs reagiert, bezogen auf das Öl, und anschließendes Entfernen fester Bestandteile, wobei der aus Mandeln gewonnene Rohstoff blanchierte gemahlene Mandeln sind.

2. Herstellungsverfahren gemäß Anspruch 1, wobei die Reaktion in einem Unterdruckzustand durchgeführt wird.

3. Herstellungsverfahren gemäß Anspruch 1, wobei die Reaktion in einer Inertgasatmosphäre durchgeführt wird.

4. Herstellungsverfahren gemäß Anspruch 3, wobei eine Temperatur durch Erhitzen in der Inertgasatmosphäre erhöht wird.

5. Verfahren zur Herstellung eines Lebensmittels, umfassend:
Herstellen eines aromatisierten Öls und Fetts nach dem Herstellungsverfahren gemäß einem der Ansprüche 1 bis 4, und
Verwenden des aromatisierten Öls und Fetts zur Herstellung des Lebensmittels.

6. Verfahren zur Herstellung des Lebensmittels gemäß Anspruch 5, wobei das Lebensmittel als eine westliche Süßware hergestellt wird.

## Revendications

1. Procédé de production d'une huile et d'une graisse aromatisées, comprenant:
la réaction d'une huile et d'une graisse à une température comprise entre 80 °C et 210 °C pendant 0,2 à 4 heures en présence de 0,6 % à 20 % en masse d'une matière première dérivée d'amandes par rapport à l'huile, puis l'élimination des matières solides, dans lequel la matière première dérivée d'amandes est constituée d'amandes blanchies et moulues.

2. Procédé de production selon la revendication 1, dans lequel la réaction est effectuée dans un état de dépressurisation.

3. Procédé de production selon la revendication 1, dans lequel la réaction est effectuée dans une atmosphère de gaz inerte.

4. Procédé de production selon la revendication 3, dans lequel la température est augmentée par chauffage dans l'atmosphère de gaz inerte.

5. Procédé de fabrication d'un produit alimentaire, comprenant:
la formation d'une huile et d'une graisse aromatisées selon le procédé de fabrication selon l'une quelconque des revendications 1 à 4, et
l'utilisation de l'huile et de la graisse aromatisées pour former le produit alimentaire.

6. Procédé de fabrication du produit alimentaire selon la revendication 5, dans lequel le produit alimentaire est formé sous la forme d'une confiserie de type occidental.
